(19) **Europäisches Patentamt / European Patent Office / Office européen des brevets**

(11) **EP 3 258 779 B1**

(12) **FASCICULE DE BREVET EUROPEEN**

(45) Date de publication et mention de la délivrance du brevet:
**22.09.2021 Bulletin 2021/38**

(21) Numéro de dépôt: **16714969.9**

(22) Date de dépôt: **19.02.2016**

(51) Int Cl.:
*A01M 7/00* (2006.01)      *A01C 23/04* (2006.01)

(86) Numéro de dépôt international:
**PCT/FR2016/050392**

(87) Numéro de publication internationale:
**WO 2016/132085 (25.08.2016 Gazette 2016/34)**

(54) **DISPOSITIF DE PULVERISATION DE DOSES DE DIFFERENTES SOLUTIONS AQUEUSES COMPRENANT PLUSIEURS PRODUITS ADDITIFS**

FELDSPRITZE FÜR DIE VERTEILUNG VON TEILMENGEN BESTEHEND AUS VERSCHIEDENEN FLÜSSIGEN SPRITZLÖSUNGEN DIE MEHRERE SPRITZZUSÄTZE ENTHALTEN

SPRAYER DEVICE FOR DISTRIBUTING LOTS OF DIFFERENT LIQUID SOLUTIONS COMPRISING SEVERAL INGREDIENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2015 FR 1551494**
**12.10.2015 FR 1502156**

(43) Date de publication de la demande:
**27.12.2017 Bulletin 2017/52**

(73) Titulaire: **Proharam, René**
**64360 Lacommande (FR)**

(72) Inventeur: **Proharam, René**
**64360 Lacommande (FR)**

(74) Mandataire: **A.P.I. Conseil**
**Immeuble Newton**
**4, rue Jules Ferry**
**64000 Pau (FR)**

(56) Documents cités:
**EP-A1- 0 527 027      EP-A1- 1 378 293**
**WO-A1-2014/200896      US-A- 4 697 739**
**US-A1- 2011 174 893**

**Description**

La présente invention concerne un dispositif de pulvérisation à l'aide d'un ensemble de buses disposées sur une rampe, en vue d'épandre sur une surface, tel qu'un sol destiné à la culture, simultanément ou alternativement différentes solutions aqueuses comportant un ou plusieurs produits additionnels.

L'invention sera plus particulièrement décrite au regard d'un système de pulvérisation à l'aide d'un ensemble de buses disposées alignées sur une rampe montée en amont ou en aval d'un véhicule agricole tel qu'un tracteur.

Dans le domaine agricole, il est usuel de répandre sur le sol des produits notamment des produits phytosanitaires, des engrais, des insecticides, des herbicides, ou tout autre produit destiné au traitement du sol, ou à l'amélioration de la croissance des plantes cultivées.

La solution aqueuse finale, destinée à être pulvérisée pour épandage sur le sol, comprend ainsi d'une part une partie d'eau ou similaire, et d'autre part deux, trois ou plusieurs produits additifs différents. Ces produits étant différents, ils doivent être incorporés dans la solution finale à des dosages différents. Par exemple le document EP1378293 divulgue la réalisation d'un seul mélange comprenant une partie d'eau et plusieurs matières actives différentes, avec un système de dosage des matières actives à injection directe afin d'être appliqué sur un champ.

Sur une même surface donnée, destinée à la culture, le besoin en traitement peut être hétérogène et nécessiter la pulvérisation de différents traitements donc de différentes solutions aqueuses en certaines parties. Ce besoin de différents traitements peut être illustré par un des traitements effectué sur la vigne où l'un des produits sera appliqué sur la grappe de raisin et le ou les autres produits seront appliqués sur le feuillage. De même, il peut être illustré par le traitement herbicide d'une surface agricole qui ne concerne que quelques adventices parsemés.

L'efficacité d'un traitement d'une surface cultivée vient de la quantité de produit épandu contenu dans la solution aqueuse ainsi que de la quantité de gouttelettes de cette solution aqueuse qui atteindra sa cible. Il est d'usage que les produits soient dosés en litres par hectare (L/Ha).

Les systèmes de pulvérisation sont généralement motorisés ou tractés ou portés par des engins agricoles tels que des tracteurs dont la vitesse d'avancement fluctue en fonction de la nature du terrain, de la déclivité ou tout autre raison.

Pour épandre uniformément une quantité de produit à l'hectare alors que la vitesse d'avancement fluctue, il est nécessaire de faire varier proportionnellement le débit du produit épandu et donc de la solution aqueuse. Les buses de la rampe d'épandage dont le rôle consiste à projeter des gouttelettes de solution aqueuse à une vitesse donnée, usuellement exprimé en pression (bars) acceptent une partie de cette variation de débit et il est d'usage d'adapter les buses à sa vitesse d'avancement ou la vitesse d'avancement au jeu de buses quand cela est possible.

De manière connue, tel qu'illustré par le brevet européen numéro 1184085, ce dispositif comporte une cuve principale formant réserve d'eau et reliée à une pompe par un conduit. La pompe est reliée à la rampe de buses de pulvérisation. Entre la pompe et la cuve d'eau, sont connectés des injecteurs, à savoir un injecteur relié à chaque cuve de produits additifs de manière à injecter dans le conduit la quantité dosée requise du produit de la cuve d'additif correspondante.

Dans un autre type de système connu, chaque cuve de produit additif est associée à une pompe à membrane ou une pompe à piston, chacune injectant dans le conduit reliant la pompe de pulvérisation à la rampe d'épandage, la quantité dosée de produits provenant de la cuve correspondante.

Par exemple, le document EP0527027 divulgue un cylindre séparé en deux chambres par un piston mobile dont la première chambre est reliée à une source d'additif et à une zone de mélange et la seconde chambre à un réservoir de liquide dit porteur qui permet d'expulser le contenu de la première chambre vers la zone de mélange. Le mélange est par la suite expulsé via une rampe de pulvérisation.

Si ces dispositifs donnent satisfaction pour des usages courants, ils présentent des limites notamment quant à la plage de concentration de dosage des produits additifs à ajouter pour obtenir le mélange adéquat. Par exemple, les pompes du système connu mentionné précédemment, présentent une plage de concentration entre 0,028l/mn et 1.13 l/mn.

De plus, les systèmes à injecteurs ou à pompe ont une précision qui n'est pas satisfaisante et varie avec la viscosité, la température ou encore le caractère hétérogène, du produit additif. Ce qui oblige l'utilisateur à faire des étalonnages permanents.

De plus, la fiabilité des pompes doseuses et des débitmètres de précision qui contrôlent les volumes de produit additifs, est affectée par le caractère corrosif de certains de ces produits additifs et par les particules abrasives qu'ils peuvent contenir. Par exemple le document WO2014/200896 propose une réduction du volume des réservoirs souvent encombrant et qui peuvent être contaminés par des solutions chimique utilisées, avec un système de pulvérisation capable d'être nettoyé facilement et dont les produits non utilisés peuvent recirculer dans le système afin d'éviter les dépôts et sédiments dans les conduits.

D'autre part, pour des vitesses très faibles du tracteur, le dosage doit être lui même fortement réduit à une valeur parfois inférieure au seuil minimal de fonctionnement, en terme de débit, de la pompe ou de l'injecteur des systèmes connus.

Ces difficultés culminent, à la limite ou au bord du terrain où se fait l'épandage, car le tracteur doit alors ralentir progressivement à l'approche de ladite limite, jusqu'à stopper pour effectuer une manœuvre de virage ou demi-tour, pour reprendre l'épandage le plus rapidement possible à la vitesse de croisière. Ceci est souvent réalisé en n'employant qu'une partie des rampes, l'autre partie se trouvant en dehors des limites du terrain ou sur une partie déjà traitée. Cela amplifie le phénomène de diminution de débit de produit additif.

Les systèmes connus, de par les limites mentionnées précédemment, conduisent à des concentrations de produits bien plus élevées que requis dans les zones limitrophes des bords de champs de culture.

Enfin la technique connue pour épandre différents produits alternativement ou simultanément sur la surface traitée, consiste à préparer différentes solutions aqueuses dans des cuves différentes et d'aiguiller cette solution sur les rampes. Ceci ne peut être réalisé que pour 2 solutions différentes car 3 ou plus de solutions serait trop lourdes matériellement à mettre en oeuvre

D'autre part cette technique est relativement contraignante car la solution de chaque cuve est figée à la préparation du traitement, n'autorisant la modulation de dosage que de l'ensemble des produits de la solution préparée et non de l'un des additifs part rapport à l'autre. De plus la surface traitée avec l'un ou l'autre des solutions aqueuses n'étant pas ou ne pouvant pas être précisément défini, en fin de traitement il reste des reliquats de produit non utilisé qui devront être gérés et éliminés.

Les systèmes connus de préparation de dose au fur et à mesure du traitement ne peuvent dans ce cas être utilisés car ils emploient une cuve tampon d'homogénéisation de la solution préparée qui influe sur le temps de réaction de commutation de deux solutions aqueuses différentes.

Par exemple le dispositif à injecteurs premièrement cité, a un temps de réaction de plusieurs dizaines de secondes ce qui demande une anticipation de plusieurs centaines de mètres dans le cas commun de traitements effectués entre 10 et 20 km/h.

La présente invention vise à remédier à ces inconvénients, et concilier ces conditions, en proposant un dispositif pour la préparation de une, deux ou plusieurs solutions aqueuses incorporant deux, trois ou plusieurs additifs différents, destinés à être mélangés à l'eau à des dosages différents, et ce avec une très grande précision d'une part et apte à doser chaque produit dans une plage très étendue de dosage et notamment dans les valeurs faibles de dosage, d'autre part.

En outre, le système de l'invention permet de préparer plusieurs solutions de produits additifs et de commuter pratiquement instantanément d'une solution à l'autre tout en modulant son dosage.

Enfin, le système de l'invention module le dosage des produits en fonction de la vitesse d'avancement tout en gardant constante la pression au niveau des buses, ce qui augmente considérablement la qualité de la pulvérisation.

A cette fin, selon l'invention, le dispositif pour la préparation de une, deux ou plusieurs solutions aqueuses destinées à être pulvérisées simultanément ou alternativement, à l'aide d'une rampe de buses de pulvérisation constituée de plusieurs tronçons de rampe mis en série ou en parallèle, sur une surface tel qu'un sol cultivé, à partir d'un mélange d'eau et de deux, trois ou plusieurs produits additifs, du type comprenant :

- une cuve principale d'eau,
- une pompe apte à être reliée à chaque tronçon de la rampe de buses de pulvérisation ;
- un premier conduit reliant la cuve d'eau à la dite pompe,
- un second conduit qui se divise en autant de branches parallèles reliant la sortie de la dite pompe à chaque tronçon de rampe et doté en chaque branche d'un clapet anti retour suivi d'un point d'injection ;
- au moins deux cuves de produits additifs ;
- des moyens permettant de doser la quantité de chaque produit additif à injecter dans le second conduit pour être mélangé à l'eau ;

est caractérisé en ce que lesdits moyens réalisent des lots successifs de différents pré mélanges d'eau et de produits additifs, chaque pré-mélange correspondant à une quantité de produits additifs, de manière à ce que ces pré mélanges puisse être différents suivant les tronçons dans lesquels ils seront injectés d'une part, qu'ils soient modulés en dosage afin d'obtenir sur chaque tronçons de rampe une concentration de produit additifs ad hoc conforme à la concentration prédéfinie d'autre part et enfin qu'après addition d'eau au pré mélange, l'on obtienne sur chaque tronçon de rampe une pression constante de pulvérisation .

Ainsi le dosage est réalisé de manière très précise, les mélanges épandus peuvent être différents sur chaque tronçon de rampe, et chaque tronçons de rampe épand à pression constante une concentration ad hoc de produits additifs, concentration qui est modulée en fonction de la vitesse d'avancement du pulvérisateur afin d'épandre comme souhaité, des litres/hectare de produits additifs en gardant constante la qualité des jets de gouttelettes au niveau des buses.

Selon une autre caractéristique, la quantité de produits additifs contenu dans un lot de pré mélange correspond exactement à la quantité de produits additifs souhaité devant être épandue sur une unité de surface prédéfinie d'une part, et le volume global de chaque lot de pré mélange est constant grâce à l'adjonction d'un complément de volume d'eau au volume de produits additifs mis.

De préférence l'unité de surface est modifiable, et est comprise entre une et quelques dizaines d'ares et plus particulièrement de l'ordre de vingt ares.

Selon une première formes de réalisation, les moyens aptes à réaliser les lots successifs de pré mélange incluent un système de dosage type piston fictif constitué :

- d'une chambre reliée du coté amont à un ou plusieurs débitmètres de mesure d'une part, et à un débitmètre compteur d'eau d'autre part, et du coté aval à un troisième conduit d'évacuation du contenu de la chambre sur lequel se trouve une vanne nommée vanne de vidange permettant l'évacuation contrôlée du contenu de la chambre,
- d' autant de vannes pilotées que de cuves de produit additif, connectées d'un coté à celle-ci et de l'autre en un point d'injection se trouvant au troisième conduit entre la chambre et l'amont de la vanne de vidange,
- de moyen permettant de contrôler précisément la quantité de produit rentrant dans la chambre constitué pour chaque débitmètre de mesure placés en amont de la chambre, en série, d'une restriction limitant le débit dans la plage de mesure du débitmètre auquel il est associé, d'une vanne permettant d'obtenir le volume désiré, et d'un conduit reliant cette vanne à l'aval de la vanne de vidange.
- de moyen de mise en pression du contenu des cuves de produit additif constitué d'une pompe à air, d'un régulateur de pression et de vannes trois voies connectées sur chaque cuves de produit additif.
- de moyen permettant d'évacuer le contenu de la chambre par un flux inverse à celui de son remplissage lors de la mesure des produits additifs constitué, en série, du débitmètre compteur d'eau, d'une restriction limitant le débit dans la plage de mesure du débitmètre, d'une vanne deux voie et d'un tuyau reliant cette vanne à l'aval de la pompe d'eau.

Dans une autre forme de représentation le débitmètre compteur d'eau est placé sur le troisième conduit d'évacuation du contenu de la chambre en aval de la vanne de rinçage.

De préférence la chambre est dimensionnée afin de contenir la somme des quantités de produits additifs du pré mélange.

L'ouverture tour à tour des vannes pilotées de chaque cuve de produit additif et de la vanne associée au débitmètre de mesure sélectionné permet de remplir la chambre du piston fictif et ainsi de mesurer très précisément le volume de produit additif entrant dans la chambre.

Lorsque la quantité de chaque produit additif correspondant au pré mélange souhaité, est rentrée dans la chambre, celle ci est vidée rapidement avec de l'eau venant de la pompe d'eau par l'ouverture de la vanne deux voie placé en son amont. La quantité d'eau rajoutée pour constituer le pré mélange est mesurée par le débitmètre compteur d'eau.

Ainsi les débitmètres de mesure ne comptabilisent qu'un déplacement d'eau ce qui permet d'employer un ou plusieurs débitmètres très précis et à faible passage pour la mesure des produits tout en s'affranchissant des caractéristiques physiques de ces produits (viscosité, hétérogénéité, corrosion, abrasion ...)

Une autre forme de réalisation de moyens aptes à réaliser les lots successifs de pré mélange incluent une seringue à étage, comprenant au moins deux chambres, et pourvue d'un piston mû de préférence par un moteur électrique.

Il est prévu :

- un cinquième conduit en dérivation du premier conduit et relié à la sortie de la cuve d'eau
- une vanne deux voies pour chaque cuve de produit additif connectée en un point d'injection au troisième conduit en amont d'une vanne de vidange, et
- une vanne trois voies pour l'eau et le contenu du troisième conduit.

Chaque chambre de la seringue est reliée au cinquième conduit ou au troisième conduit via une vanne trois voies dont une première voie qui est aussi la voie commune de la vanne, est reliée à une des chambre de la seringue , la seconde voie est reliée à une partie amont du troisième conduit, la troisième voie est reliée à la partie aval du cinquième conduit.

Chaque vanne à deux ou trois voies permet le remplissage de la chambre correspondante, soit d'eau, soit de produit additif correspondant. Cet aiguillage permet de remplir une chambre sélectionnée avec du produit pendant que les autres chambre se remplissent d'eau.

Dès lors, la seringue aspire chaque produit additif, et les dimensions de chaque chambre de la seringue sont calculées pour réaliser in fine le pré mélange selon le dosage souhaité pour le produit correspondant.

Dans une autre forme de représentation les étages de la seringue sont remplacés par autant de pistons indépendants mus par un moteur.

Conformément à l'invention, le dispositif comporte deux, trois ou plusieurs cuves tampons aptes à recevoir chacune des lots de pré mélange successifs, et dont la sortie est reliées pour chacune à une pompe puis aux points d'injection des branches du second conduit afin de pouvoir alimenter un ou plusieurs tronçons de rampe en pré mélange

Préférentiellement chaque cuve tampon contient des lots de pré mélange identiques et des lots de pré mélange différents entre elles.

En amont des cuves tampons une vanne trois voie dans le cas de deux cuves tampons ou multi voies dans le cas de plusieurs cuves tampons, aiguillent les lots de pré mélange constitués dans l'une ou l'autre cuve tampon.

Chaque cuve tampon est scindée en deux parties : une partie haute recevant le pré mélange en cours de constitution, une deuxième partie recevant le pré mélange une fois celui ci totalement constitué. Une vanne deux voies relie la partie haute à la partie basse de la cuve tampon.

Chaque sortie de cuve tampon comporte des moyens de régulation du débit du pré mélange à injecter dans les tronçons de rampe souhaité. Ces dits moyens sont constitués successivement d'une pompe, d'un régulateur dont les retours sont canalisés sur la partie basse de la cuve tampon correspondante afin d'en assurer le brassage, d'un clapet anti retour, d'un débitmètre et d'un conduit de sortie de pré mélange.

Le contenu de chaque cuve tampon est ensuite aiguillé et injecté dans le deuxième conduit au niveau de chaque branche de chaque tronçon de rampe et ainsi reconstitue avec l'eau de la pompe, le mélange ad hoc désiré à chaque tronçon de rampe à un débit constant.

Avantageusement un multiplexeur relie les conduits de sortie de pré mélange des cuves tampons, aux points d'injection des branches du deuxième conduit allant aux tronçons de rampe, et aiguille ainsi, au choix, n'importe quel pré mélange sur n'importe quel tronçon de rampe.

Dans une forme préférée de réalisation, les moyens aptes à réaliser le multiplexage lorsque le dispositif possède deux cuves tampon est une vanne trois voies par tronçon de rampe qui relie sur une voie le conduit de sortie de pré mélange de la première cuve tampon, sur la deuxième voie, le conduit de sortie de pré mélange de la deuxième cuve tampon et sur l'un des tronçons de rampe, la troisième voie commune. Plus généralement dans le cas de trois ou plus de cuves tampon, une vanne multi voie ayant le même nombre de voies plus une que le nombre de cuves tampons, remplace ladite trois voies.

Chaque vanne trois voies est reliée à un mélangeur qui reçoit d'une part le pré mélange aiguillé par la vanne et d'autre part, l'eau de la pompe par le deuxième conduit.

Chaque élément de commutation du multiplexeur ainsi que les points de jonction du deuxième conduit sont placés sur le tronçon de rampe correspondant, au plus prés des buses afin d'accélérer le temps de réaction des commutations de pré mélange d'une ou de l'autre cuve tampon.

Dans la forme préférée de réalisation d'un multiplexeur à deux cuves tampons décrit ci dessus, la vanne trois voies dédiée à l'aiguillage d'un tronçon de rampe sera placée au plus prés de ce tronçon et le plus souvent dessus.

Avantageusement d'une part le débit de la pompe en sortie de chaque cuve tampon est régulé en fonction de la vitesse d'avancement du pulvérisateur et du nombre de tronçons connectés par l'aiguillage du multiplexeur et d'autre part, la pression de la pompe d'eau est régulée afin d'assurer une constante pression au niveau des buses de la rampe de pulvérisation et corriger les variations de pression dues aux changements de débit des pompes en sortie de cuve tampon lors des changement de vitesse du pulvérisateur.

Ainsi les pompes des cuves tampons assurent le dosage précis des produits injectés sur la surface désirée et la pompe d'eau assure une pression constante donc une taille constante de gouttelettes au niveau des buses de la rampe.

Le dispositif de l'invention permet de moduler la dose dans une parcelle dans laquelle l'on souhaite faire varier l'ensemble des produits pulvérisés.

Selon l'art antérieur, on module la dose du mélange contenu dans la cuve du pulvérisateur en agissant sur le volume de mélange répandu à l'hectare, en baissant ou augmentant la pression au niveau des rampes.

Précisément, selon l'art antérieur, on fait varier sur la surface traitée, le nombre et la taille des gouttelettes chargées en produit additifs à une concentration donnée.

Ceci a deux conséquences dommageables :

- le risque de provoquer un brouillard très volatile lorsque la quantité de produit doit augmenter ;
- le jet au niveau des buses ne couvre plus la surface lorsqu'on souhaite épandre moins de produit.

L'invention remédie à ces inconvénients et permet de diminuer ou augmenter drastiquement la quantité de produit pulvérisé.

Le fait de mélanger à l'eau une quantité de produit additif en ajustant son débit afin d'obtenir une quantité défini à l'hectare tout en gardant la pression constante au niveau des rampes, revient à faire varier la quantité de produit additif dans les gouttelettes pulvérisées

De même le fait de pouvoir préparer en continu des lots différents de produits additifs dans chaque cuve tampon et de permettre d'aiguiller leur contenu sur l'une ou l'autre tronçon de rampe permet à l'utilisateur par exemple en vigne de traiter le feuillage avec un ensemble de produits et par exemple seulement la grappe avec d'autres produits. Il permet de même à l'agriculteur de par exemple traiter sa parcelle avec un ensemble de produit et de pulvériser instantanément d'autres produits seulement sur les tâches d'adventices indésirables au moment ou il passe dessus (exemple tache de chardons au milieu du champ). Ce dispositif apporte une solution au défit actuel de diminution des entrants dans les parcelles imposé par le grenelle de l'environnement.

Le fait que tous les lots de pré mélanges soient à volume constant offre l'avantage de minimiser les variations de pression au niveau des rampes lors des commutations des multiplexeurs .

La présente invention est maintenant décrite à l'aide de trois exemples illustratifs et nullement limitatifs de la portée de l'invention, et à partir de trois figures ci jointes, montrant des schémas synoptiques du dispositif de l'invention.

- La figure 1 présente un schéma d'une première forme préférée de l'invention, faisant appel à des moyens appelés « piston fictif » ;
- La figure 2 présente un schéma d'une seconde forme de réalisation de l'invention à l'aide d'une seringue à étages ;
- La figure 3 présente un schéma d'une troisième forme de réalisation incluant à la fois le « piston fictif » du dispositif de la figure 1 et la « seringue à étages » du dispositif de la figure 2.

Dans la suite de la description, les termes de «hauteur», «largeur», les qualificatifs « horizontal », « vertical », « haut » et « bas » d'un élément, sont utilisés dans le cadre d'une installation normale du dispositif, c'est à dire relatif à une notion verticale par rapport à un plan horizontal. De même les termes « amont », « aval », « distal » et « proximal » se réfèrent à la direction de l'écoulement du fluide.

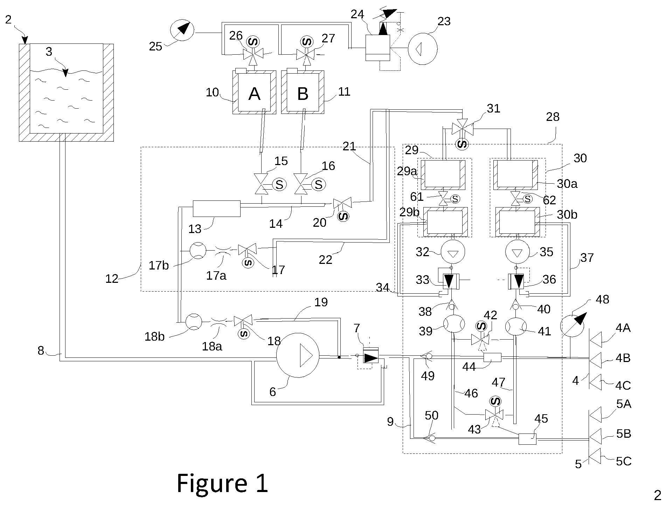

Le dispositif 1, selon l'exemple montré figure 1, comporte :

- une cuve principale 2 formant réservoir d'eau 3 ;
- des tronçons de rampe 4 et 5 de une ou plusieurs buses de pulvérisation 4A à 4C et 5A à 5C connues en elles-mêmes (seuls 2 tronçons de rampe avec 3 buses sont représentés sur le schéma par souci de clarté) ; les tronçons de rampe sont de type connus en soi et peuvent former une seule rampe ou plusieurs rampes parallèles de longueur entre 4 et 50m et peuvent comporter entre 1 et 8 buses ;
- une pompe 6 et un régulateur de pression 7 dont le retour revient en amont de la pompe 7 ou dans une autre représentation, dans la cuve principale 2 ;
- un premier conduit 8 reliant la cuve d'eau 2 à la pompe 6
- un deuxième conduit 9 qui se divise en plusieurs branches afin de relier la pompe 6 aux différents tronçons de rampe 4 et 5 et comprenant dans chaque branche, un clapet anti retour respectivement 49 et 50 puis un point d'injection respectivement 44 et 45
- deux cuves 10 et 11 contenant chacune des produits additifs différents. Il est possible de prévoir trois, quatre ou plus de cuves de produits additifs.

Des moyens 12 nommé système de dosage type piston fictif permettant de doser la quantité de chaque produit additif et de les mélanger à l'eau afin de réaliser un pré mélange. Pour des raisons de clarté de la figure, seulement 2 cuves de produits additifs et un seul débitmètre de mesure ont été représentés. Ces moyens incluent:

- d'une chambre 13 reliée du coté amont à un ou plusieurs débitmètres de mesure 17b d'une part, et à un débitmètre compteur d'eau 18b d'autre part, et du coté aval à un troisième conduit 14 d'évacuation du contenu de la chambre sur lequel se trouve une vanne nommée vanne de vidange 20 permettant l'évacuation contrôlée du contenu de la chambre,
- de cuves de produit additifs 10 et 11 reliées en parallèle, chacune à une vanne pilotée 15 et 16 connectée en un point d'injection au troisième conduit 14 entre la chambre 13 et l'amont de la vanne de vidange 20,
- de moyen permettant de contrôler précisément la quantité de produit rentrant dans la chambre constitué pour chaque débitmètre de mesure 17b placés en amont de la chambre, en série, d'une restriction 17a limitant le débit dans la plage de mesure du débitmètre auquel il est associé, d'une vanne 17 permettant d'obtenir le volume désiré, et d'un conduit 22 reliant cette vanne à l'aval de la vanne de vidange 20 .
- de moyen de mise en pression du contenu des cuves de produit additif constitué d'une pompe à air 23, d'un régulateur de pression 24 et de vannes trois voies 26 et 27 connectées sur chaque cuves de produit additif respectivement 10 et 11.
- de moyen permettant d'évacuer le contenu de la chambre par un flux inverse à celui de son remplissage lors de la mesure des produits additifs constitué, en série, du débitmètre compteur d'eau 18b, d'une restriction limitant le débit dans la plage de mesure du débitmètre 18a, d'une vanne deux voie 18 et d'un tuyau 19 reliant cette vanne 18 à l'aval de la pompe d'eau 6.

Des moyens permettant d'établir dans les cuves 10 et 11, une pression suffisante pour pousser les produits additifs dans la chambre de dosage lorsque les vannes 15 et 16 sont passantes.

Ces moyens sont constitués:

- d'une pompe à air 23 ;
- d'un régulateur 24 et de un manomètre 25 qui permettent de piloter la pression de la pompe 23;
- de vannes 3 voies 26 et 27 reliées pour la première voie aux cuves de produit additif 10 et 11, la deuxième voie à la sortie du régulateur 24 et la dernière voie à la pression atmosphérique.

Ces vannes permettent d'établir dans chaque cuve une pression contrôlée puis de dégazer en revenant à la pression atmosphérique lorsque la pulvérisation est terminée ou que l'utilisateur souhaite remettre du produit additif dans la cuve.

Des moyens 28 permettant d'aiguiller et d'injecter dans le conduit 9 tout en modulant leur dosage, les lots de pré mélanges réalisés par les moyens 12, ceci afin d'y être mélangé à l'eau et constituer le mélange ad hoc pour la pulvérisation au niveau des buses de chaque sous tronçons 4 et 5.

Ces moyens incluent :

- deux cuves tampons 29 et 30 contenant des lots de pré mélanges à dosages différents de produits additifs A et B. Il est par exemple possible d'imaginer que la cuve 29 ne contienne que du produit A et que la cuve 30 ne contienne que le produit B ou tout autre combinaison des produits. Il est possible de prévoir trois, quatre ou plus de cuves tampons qui permettront d'appliquer sur chaque tronçon de rampe des combinaisons différentes et plus variées de produits additifs ;
- Une vanne multi voies 31 dont la voie commune est reliée au conduit 21, chacune des autres voies étant reliées à chaque cuve tampon 29 et 30, aiguillent les lots de pré mélange dans la cuve tampon souhaitée.
- Chaque cuve tampon 29 et 30 est scindée en deux parties : une partie haute 29a et 30a recevant le pré mélange en cours de constitution, une deuxième partie 29b et 30b recevant le pré mélange une fois celui ci totalement constitué. Une vanne deux voies 61 et 62 relie la partie haute à la partie basse des cuves tampons respectives.
- Deux pompes 32 et 35 sont reliées en amont, au bas de chaque cuve tampon respectivement 29 et 30 et en aval à un régulateur piloté en débit, respectivement 33 et 36 dont les retours 34 et 37 sont canalisés en partie basse des cuves tampons respectives à des fins de brassage et d'homogénéisation des lots de pré mélange contenus dans ces cuves.
- Deux conduits 46 et 47 reliés à l'aval des régulateurs respectivement 33 et 36, amènent les pré mélanges au plus prés des tronçons de rampe respectivement 4 et 5 .
- Deux débitmètres 39 et 41 et deux clapets anti retour 38 et 40 placés sur chaque conduit 46 et 47 contrôlent précisément le débit de l'injection des pré mélanges.
- Un moyen de multiplexage du type vannes multi voies 42 et 43 dont chaque voie est reliée à chaque conduit 46 et 47 et dont la voie commune est reliée aux points d'injection 44 et 45 des tronçons de rampe, respectivement pour la vanne 42 au point d'injection 44 et pour la vanne 43 au point d'injection 45, permet d'aiguiller les pré mélanges sur les tronçons désirés. Le nombre de vanne multi voies est égal au nombre de tronçons de rampe dans lesquels l'utilisateur souhaite injecter des mélanges de produits additifs différents.
- La jonction d'injection 44 et 45 doté d'un mélangeur dynamique en soi connu, reçoit d'une part le sortie de la voie commune des vannes respectivement 46 et 47 et d'autre part une des branches du conduit 9 . L'aval des mélangeurs 44 et 45 est relié à chaque tronçon de rampe respectivement 4 et 5. Le pré mélange est ainsi mélangé à l'eau et un mélange homogène est conduit en au niveau des buses de pulvérisation.
- Un manomètre 48 placé sur un tronçon de rampe contrôle la pression et donc le débit au niveau de ce tronçon de rampe 4. Les buses étant identiques sur tous les tronçons et les canalisations de chaque tronçon ayant les mêmes pertes de charge, le pilotage de la pression donnée par ce manomètre 48 permet de pulvériser uniformément le mélange souhaité.

Les régulateurs 7, 24, 33, 36, les vannes 15,16,18,20,26,27,31,32,33 sont reliés à un pupitre de commande, non représenté, et qui inclut des moyens aptes à actionner et commander ces éléments, en fonction des paramètres requis, donnés par les débitmètres 17, 21 39, 41 , les manomètres 25,48, mais aussi par les données de capteurs externes au dispositif ou données par l'utilisateur.

Ces paramètres incluent en autre :

- La vitesse du tracteur ;
- La nature et la topographie du terrain où doit se faire l'épandage ;
- Le dosage de chaque produit additifs appliqué à chaque parcelle cible;

- La cartographie de la parcelle traitée et la géo localisation du pulvérisateur et de chaque tronçons de rampe ;
- Le dosage final eau/produit additifs à la sortie des buses ;

Le fonctionnement du dispositif et la mise en œuvre du procédé est le suivant :

Dans la position de départ, la chambre 13 est pleine d'eau, les cuves de produits additifs 10 et 11 contiennent respectivement le produit A et B. Toutes les vannes sont commandées à la fermeture.
La cuve 2 est remplie d'eau, les vannes 26 et 27 sont orientées vers la pression atmosphérique.

Une pression de 1 à 2 bars est établie dans chaque cuve par le pilotage du régulateur d'air 24 par la pression donnée par le manomètre 25 et la commutation des vannes 26 et 27.

La vanne 31 est orientée vers la cuve 29.

La vannes 15 puis la vanne 17 s'ouvrent laissant rentrer le produit A dans le tuyau 14 et la chambre 13. L'eau chassée de la chambre 13 traverse le débitmètre 17b qui mesure très précisément le volume de produit additif rentrant. Lorsque la quantité souhaitée de produit additif est atteinte, la vanne 17 puis la vanne 15 se ferment, puis la même opération est effectuée avec le produit B par l'ouverture et la fermeture de la vanne 16 puis 17.

La chambre 13 est dimensionnée afin de pouvoir contenir la somme des volumes des produits ainsi rentrés.

La vanne 20 puis la vanne 18 sont alors ouvertes et l'eau propulsée par la pompe 6 rentre dans la chambre 13 en repoussant les produits précédemment introduits. La quantité d'eau est précisément comptabilisée par le débitmètre 18b. Ce mélange eau/produit forme un pré mélange.

Lorsque le volume de pré mélange est atteint les vannes 18, puis 20, se ferment.

Ainsi, pour un cycle remplissage/refoulement, la chambre de mesure d'abord se remplie de un ou de plusieurs produits additifs puis une quantité donnée d'eau refoule ces produits pour former une solution aqueuse contenant le dosage ad hoc, préétabli du produit correspondant.

A la fin du cycle, dans l'exemple montré de deux produits additifs A et B, la cuve tampon 29 contient une solution aqueuse qui est composée d'une part d'eau et d'autre part de produit A et B correspondant au dosage requis de chaque produit.

Avantageusement, cette quantité de solution aqueuse, créée à chaque cycle, correspond à la quantité nécessaire du produit correspondant pour traiter une unité de surface prédéterminée.

Cette unité de surface est déterminée à l'avance par le système en fonction de la vitesse d'avancement, de la grandeur de la rampe et du nombre de tronçons connectés par les vannes 42 et 43, et du débit de mélange souhaité. Elle est de l'ordre de quelques dizaines d'ares, et de préférence de 20 ares.

Chaque cycle forme un lot de pré mélange qui va être tour à tour introduit dans la cuve tampon 29, puis dans la cuve tampon 30 lorsque la vanne 31 est orientée en début de cycle vers celle ci.

Dans le cas d'une préparation de lot dans la cuve tampon 29, la vanne 61 est fermée.
La préparation s'effectue dans la partie haute 29a de la cuve. Lorsque le cycle est terminé, la vanne 61 s'ouvre et le lot préparé dans la partie haute est transféré dans la partie basse 29b de la cuve tampon.

De préférence les parties basses des cuves auront une contenance de 2 lots de pré mélange afin que le calculateur gérant le système, puisse optimiser le contenu du pré mélange disponible pour le traitement et plus particulièrement pour la fin du traitement et en optimiser la quantité restante.

Lorsque les cuves tampons 29 et 30 contiennent une quantité de pré mélange, la pulvérisation peut commencer. Les vannes d'aiguillage 42 et 43 sont positionnées de telle manière à ce que le pré mélange de chaque cuve soit aiguillé sur l'une ou l'autre tronçon de rampe 4 ou 5.

La pompe 6 délivre au niveau de l'ensemble des tronçons de rampe une pression mesurée par le manomètre 8 et pilotée par le régulateur 7 en fonction du type de buses employées et de la pression de travail souhaitée.

Les pompes 32 et 35 délivrent un débit mesuré par les débitmètres 39 et 41 et piloté par les régulateurs 33 et 36. Ce débit est régulé en fonction de la vitesse d'avancement du tracteur et de la largeur constituée par les tronçons de rampe connectés sur la cuve tampon.

Le pré mélange de chaque cuve tampon est aiguillé par les vannes 42 et 44 dans le tronçon de rampe souhaité et le mélange final s'effectue dans un mélangeur dynamique 44 et 45 qui assurent l'homogénéité de l'eau venant de la pompe 6 et des pré mélanges venant des cuves tampons 29 et 30.

Lorsque la vitesse du pulvérisateur varie, le débit du pré mélange varie influençant la pression rampe qui est aussitôt compensée par l'ajustement de la pression donné par le régulateur 7 de la pompe 6.

Ainsi le système réalise une modulation de dose de produit injecté en fonction de la vitesse d'avancement du tracteur tout en gardant une pression stable de pulvérisation au niveau des buses.

Par ailleurs grâce à la commutation des vannes d'aiguillage 42 et 43 et la proximité des points l'injection 44 et 45 des pré-mélanges par rapport aux buses 4 et 5, le système instantanément commute un type de dosage de produits additifs par un autre dosage qui peut être entièrement différent. A titre d'exemple le temps de commutation sur un tronçon de 6 buses reliées par un tuyau de diamètre de 4mm et avec une proximité de 0,5 m du point d'injection par rapport à ce tuyau, est de 1 seconde

A titre d'exemple :

Pulvérisation à 3 bars soit 1,3 l/mn avec des buses dites bleues, répondant à la norme ISO 10625:2005 identifiant les buses par leur code de couleur.

> Volume surfacique du produit A:0,1 l/ha
> Volume surfacique du produit B : 1,5 l/ha
> Rampe de largeur tous tronçons ouvert 44 m et 2 buses par mètre
> Vitesse d'avancement du tracteur 15 km/h

Supposons que l'on souhaite épandre le produit B par toutes les buses de la rampe :

Préparation d'un pré mélange de 2 l pour une surface de 0,2 ha soit 10 l/ha

Cuve tampon 29 préparation du produit B

$$\text{Volume de produit B} = 0,2 \text{ ha} \times 1,5 \text{ l/ha} = 0,3 \text{ L}$$

$$\text{Volume d'eau rajouté} = 2 \text{ l} - 0,3 \text{ l} = 1,7 \text{ l}$$

Cuve tampon 30 préparation du produit A + B

$$\text{Volume de produit A} = 0,2 \text{ ha} \times 0,1 \text{ l/ha} = 0,02 \text{ l}$$

$$\text{Volume de produit B} = 0,2 \text{ ha} \times 1,5 \text{ l/ha} = 0,3 \text{ l}$$

$$\text{Volume d'eau rajouté} = 2 \text{ l} - 0,3 \text{ l} - 0,02 = 1,68 \text{ l}$$

Traitement avec B sur toute la rampe :
Aiguillage des vannes 42 et 43 sur la cuve tampon 29

$$\text{Débit pompe } 32 = 10 \text{ l/ha} \times 44 \text{ m} \times 15 \text{ km/h} / 600 = 11 \text{ l/mn}$$

Débit pompe 35 = 0 l/mn

$$\text{Débit au niveau de la rampe} = 44 \text{ m} \times 2 \text{ buses} \times 1,3 \text{ l/mn} = 114,4 \text{ l/mn}$$

$$\text{Débit pompe } 6 = 114,4 \text{ l/mn} - 11 \text{ l/mn} = 104,4 \text{ l/mn}$$

Si l'on souhaite ralentir l'avancement du tracteur à 5 km/h (ce qui est impossible à réaliser avec un pulvérisateur de type connu sans changer de buses) :
Pression des buses reste à 3,5 bars soit 1,3 l/mn

$$\text{Débit pompe } 32 = 10 \text{ l/ha} \times 44 \text{ m} \times 5 \text{ km/h} / 600 = 3,66 \text{ l/mn}$$

Débit pompe 35 = 0 l/mn

$$\text{Débit au niveau de la rampe} = 44 \text{ m x 2 buses x 1,3 l/mn} = 114,4 \text{ l/mn}$$

$$\text{Débit pompe 6} = 114,4 \text{ l/mn} - 3,66 \text{ l/mn} = 110,73 \text{ l/mn}$$

Si l'on souhaite, à un instant précis, pulvériser le produit A+B sur la moitié de la rampe et le produit B sur l'autre moitié :
La vanne 42 reste aiguillée sur la cuve tampon 29 et la vanne 43 commute sur la cuve tampon 30.

$$\text{Débit pompe 32} = 10 \text{ l/ha x 22 m x 15 km/h} / 600 = 5,55 \text{ l/mn}$$

$$\text{Débit pompe 35} = 0 \text{ l/ha x 22 m x 15 km/h} / 600 = 5,55 \text{ l/mn}$$

$$\text{Débit au niveau de la rampe} = 44 \text{ m x 2 buses x 1,3 l/mn} = 114,4 \text{ l/mn}$$

$$\text{Débit pompe 6} = 114,4 \text{ l/mn} - 11 \text{ l/mn} = 104,4 \text{ l/mn}$$

Le dispositif de l'invention permet de doser les produits additifs avec une très grande précision, et bien supérieure à celles des systèmes de l'art antérieur.

En effet, la précision obtenue par le dispositif de l'invention est inférieure à 1 %, et ce pour tout liquide de viscosité < 2000 cps.

Le dosage réalisé sur la quantité d'eau permet de doser des produits contenant des particules abrasives ce qui accroît considérablement la fiabilité du système par rapport aux systèmes jusqu'alors proposés.

Dans le cas d'un produit dosé à 6 l/ha, un tracteur avec un pulvérisateur de 44m roulant à 18 km/h nécessite un débit de 6600 ml/mn. S'il pulvérise en même temps un produit à 50 g/ha et qu'il ferme une partie de sa rampe (cas de pulvérisation en limite de parcelles) et que cette partie de rampe est de 4m et qu'il diminue sa vitesse à 4 km/h, le produit de 50 g/ha a un débit de 1,3 ml/mn. Le rapport entre ces deux valeurs extrêmes est de 1,3/6600 = 4950. Ce rapport représente la plage ou gamme de dosages que doit être en mesure de couvrir le système Les systèmes connus (donc de l'art antérieur) ne permettent pas de couvrir une plage aussi étendue.

Le dispositif de l'invention présente une échelle ou gamme de dosage bien plus étendue que celle de l'art antérieur. L'invention permet ainsi de répondre à l'ensemble des demandes de dosages d'un pulvérisateur en toute situation.

Les systèmes connus utilisent des buses opérant dans une plage de pression de pulvérisation entre 2 bars et 5 (ou 8) bars suivant la technologie desdites buses. Un pulvérisateur équipé de buses bleus comme définie dans la norme ISO 10625:2005 par exemple et qui a préparé un mélange en cuve pour pulvériser à 100 l/ha ce mélange, pulvérisera à 5 bars à 18 km/h et à 2 bars à 12 km/h .

Ceci représente les limites de vitesse qu'un tel système connu ne pourra dépasser au risque de sous doser lorsqu'il dépasse 18 km/h et de sur doser lorsqu'il descend sous 12 km/h. De plus, la pulvérisation obtenue par ce type de pulvérisateur connu n'est pas identique à 18km/h et à 12 km/h d'avancement du tracteur. Dans le premier cas, à 5 bars le jet des buses est un brouillard formé de gouttelettes très fines, à 2 bars les gouttelettes sont beaucoup plus grosses. Or, l'effet du traitement est fortement modifié par la taille des gouttelettes.

Au contraire, le dispositif selon l'invention permet de moduler la quantité des produits en fonction de la vitesse d'avancement tout en gardant une pression fixe de pulvérisation au niveau des buses et ainsi de traiter avec une taille de gouttelettes toujours identiques quelque soit la vitesse d'avancement.

Enfin, les systèmes connus ne permettent pas de moduler un produit ou plusieurs produits instantanément dans la parcelle dans le cas par exemple de ronds de chardons disséminés dans une parcelle ou d'un traitement anti botrytis sur la grappe de raisin. Il est nécessaire aujourd'hui de passer deux fois dans la parcelle en traitant l'ensemble de la parcelle avec un mélange, et en repassant dans cette même parcelle pour traiter les ronds de chardons ou la grappe de raisin.

Le dispositif selon l'invention permet de module le dosage et l'association des produits additifs instantanément au niveau de tout ou partie de la rampe de pulvérisation (< 1 seconde) ce qui ne peut être réalisé sur les systèmes connus.

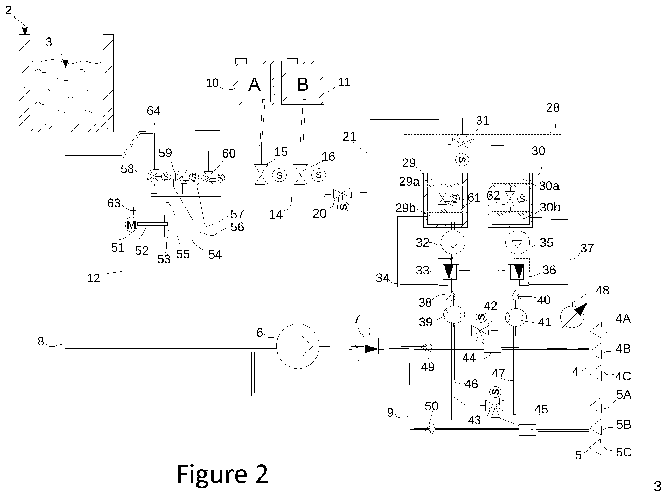

Dans une autre forme de réalisation présentée dans la figure 2 les moyens aptes à réaliser les lots successifs de pré-mélange par une seringue à étage.

Ces moyens incluent :

- un conduit 64 montée en dérivation du conduit 8 amenant l'eau de la cuve 2
- une seringue 54 à étages, en l'occurrence trois, pourvue d'un piston 53 mû par un moteur électrique 51. Un capteur de position 63 de type connu en soi, relié au vérin 52 du piston, permet de positionner très précisément le piston de la seringue. Les trois chambres 55, 56, 57 de la seringue 54 sont de volume différents et croissants ;
- trois vannes à trois voies 58, 59, 60 : une première voie de chaque vanne qui est aussi la voie commune de la vanne, est reliée à une chambre respectivement 55, 56, 57 de la seringue ; une seconde voie de chaque vanne est reliée à une partie amont du troisième conduit 14 (en amont des cuves de produit 10 et 11); la troisième voie est reliée à la partie aval du conduit 64.

De façon identique au piston fictif, ces moyens incluent en outre :

- des cuves de produit additifs 10 et 11 reliées en parallèle, chacune à une vanne pilotée 15 et 16 connectée en un point d'injection au troisième conduit 14 entre la chambre 13 et l'amont de la vanne de vidange 20,

Le moteur 51, les vannes à trois voies 58, 59, 60, les vannes 15 et 16, la vanne 20 et le capteur 63 sont reliés à un pupitre de commande, non représenté, et qui inclut des moyens aptes à actionner/ commander ces éléments, en fonction de paramètres requis, donnés par l'utilisateur.

Le fonctionnement du dispositif et la mise en œuvre du procédé est le suivant :
Dans la position de départ, la seringue 54 est vide et les chambres 55,56 ,57 ont un volume quasi nul (le piston étant repoussé au maximum).Le circuit est rempli d'eau. L'utilisateur commande toutes les vannes à la fermeture.

Puis, les vannes à trois voies 58, 59,60 sont commandées à l'ouverture, étant entendu qu'une seule vanne trois voies est ouverte à la fois sur le troisième conduit 14 les autres voies étant positionnées de manière à permettre le passage de l'eau.

Plus précisément, la première vanne trois voies 60 est commandée à l'ouverture ainsi que la vanne 15, de manière à relier la cuve 10 à la chambre 57, la plus petite, tandis que chacune des autres vannes trois voies 58 et 59 relie la cuve d'eau 2 à une autre chambre, 55 et 56.

Le moteur 51 actionne le piston de manière à aspirer dans la première chambre 57 une quantité donnée, préétablie de produit A contenu dans la cuve 10, les autres chambres 55 et 56 se remplissant d'eau.

Le mouvement de translation du vérin 52 est mesuré précisément par un capteur 63 de type connu, magnétique ou autre. Le capteur commande le moteur 51 en fonction des commandes et consignes reçues du boîtier de commande.

Lorsque la quantité de produit requit est absorbé par la seringue, le piston s'arrête, la vanne15 se ferme et la vanne 16 s'ouvre pour absorber le produit B. Le piston reprend sa course avec une configuration égale ou différente des vannes 58, 59, 60 correspondant au dosage souhaité du produit B.

Une fois que la quantité de produit B est absorbé, le piston s'arrête, la vanne 16 se ferme et le piston continu sa course pour compléter tout le volume de la seringue avec de l'eau. Arrivé en bout de course, les chambres contiennent un lot de pré mélange. Ensuite, la vanne 20 s'ouvre et le piston est repoussé par le moteur 51 en sens inverse (vers la droite de la figure 2), pour refouler le contenu des trois chambres remplies vers les cuves tampons 29 ou 30 suivant l'aiguillage de la vanne 31.

Ainsi pour un cycle d'aspiration/refoulement, la seringue d'abord aspire un ou plusieurs produits additifs et de l'eau, puis refoule une quantité donnée de solution aqueuse contenant la quantité de produit à épandre sur une unité de surface pré établie comme réalisé avec le piston fictif.

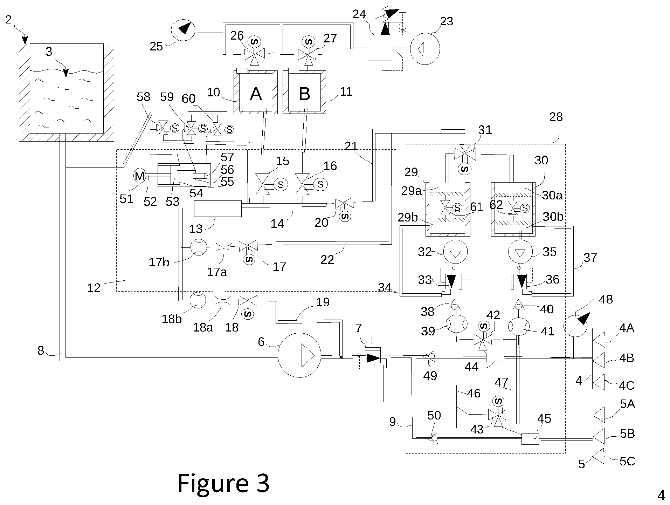

Dans une autre forme de réalisation présentée dans la figure 3 les moyens aptes à réaliser les lots successifs de pré-mélange est réalisée à partir du mixte des deux techniques présentées en figure 1 et en figure 2.

Le dosage par «piston fictif» (figure 1) et par seringue à étages (figure 2) sont complémentaires et il est possible d'employer par exemple, la technique de la seringue pour les petits dosages et la technique du piston fictif pour les plus grands dosages de produit additifs.

Dans la figure 3 seul le module de dosage 12 diffère des autres figures, c'est pourquoi, la description qui suit, ne s'attache qu'aux moyens le réaliser ce module.

Ainsi dans une forme préférée le module 12 est constitué :

- d'une chambre 13 reliée du coté amont à un ou plusieurs débitmètres de mesure 17b d'une part, et à un débitmètre compteur d'eau 18b d'autre part, et du coté aval à un troisième conduit 14 d'évacuation du contenu de la chambre sur lequel se trouve une vanne nommée vanne de vidange 20 permettant l'évacuation contrôlée du contenu de la chambre,
- de cuves de produit additifs 10 et 11 reliées en parallèle, chacune à une vanne pilotée 15 et 16 connectée en un point d'injection au troisième conduit 14 entre la chambre 13 et l'amont de la vanne de vidange 20,

- de moyen permettant de contrôler précisément la quantité de produit rentrant dans la chambre constitué pour chaque débitmètre de mesure 17b placés en amont de la chambre, en série, d'une restriction 17a limitant le débit dans la plage de mesure du débitmètre auquel il est associé, d'une vanne 17 permettant d'obtenir le volume désiré, et d'un conduit 22 reliant cette vanne à l'aval de la vanne de vidange 20 .

  d'un conduit 64 montée en dérivation du conduit 8 amenant l'eau de la cuve 2

- d'une seringue 54 à étages, en l'occurrence trois, pourvue d'un piston 53 mû par un moteur électrique 51. Un capteur de position 63 de type connu en soi , relié au vérin 52 du piston, permet de positionner très précisément le piston de la seringue. Les trois chambres 55, 56, 57 de la seringue 54 sont de volume différents et croissants ;

- de trois vannes à trois voies 58, 59, 60 : une première voie de chaque vanne qui est aussi la voie commune de la vanne, est reliée à une chambre respectivement 55, 56, 57 de la seringue ; une seconde voie de chaque vanne est reliée à une partie amont du troisième conduit 14 (en amont des cuves de produit 10 et 11); la troisième voie est reliée à la partie aval du conduit 64.

Exemple : un produit A à faible dosage (exemple 50 g/ha) et un produit B à plus fort dosage (exemple 4 l/ha).

Dans un premier temps les vannes 15, 16, 20, 17 et 18 sont fermées, la seringue est vide (piston en bout de course de telle manière que les chambres 55, 56, 57 soient pratiquement vides).

La vanne 15 s'ouvre et les vannes 60 est positionnée du coté conduit 14, les vannes 58 et 59 sont positionnées du coté conduit 64. Le moteur 51 entraîne le piston 53 et la chambre 57 se remplie du contenu du conduit 14 et le produit A rentre dans le conduit 14 du volume 57 déplacé, les chambres 55 et 56 se remplissent d'eau. Lorsque le volume de produit A souhaité est atteint, le moteur 51 s'arrête, la vanne 15 se ferme et les vannes 16 puis 17 s'ouvrent en laissant rentrer dans la chambre 13 le produit B. Lorsque le volume de produit B comptabilisé par le débitmètre 17b, est atteint, les vannes 17 puis 16 se ferment. La vanne 20 et 18 s'ouvrent et simultanément le moteur 51 repousse le piston 53 pour vider totalement les chambres 55, 56, 57 et le débitmètre 18b comptabilise l'eau rinçant la chambre 13. Lorsque le volume constituant un lot est atteint, le moteur 51 s'est déjà arrêté ayant vidé les chambres de la seringue, et les vannes 18 puis 20 se ferment.

Un lot contenant précisément la quantité de produit A et B désirée a été introduit dans la cuve 29 ou 30 suivant la position de la vanne d'aiguillage 31

## Revendications

1. Dispositif pour la préparation de une, deux ou plusieurs solutions aqueuses destinées à être pulvérisées simultanément ou alternativement, à l'aide d'une rampe de buses de pulvérisation constituée de plusieurs tronçons de rampe mis en série ou en parallèle, sur une surface tel qu'un sol cultivé, à partir d'un mélange d'eau et de deux, trois ou plusieurs produits additifs, du type comprenant :

   • une cuve principale (2) d'eau,
   • une pompe (6) apte à être reliée à chaque tronçon de la rampe de buses de pulvérisation;
   • un premier conduit (8) reliant la cuve d'eau à ladite pompe,
   • un second conduit (9) qui se divise en autant de branches parallèles reliant la sortie de la dite pompe (6) à chaque tronçon de rampe (4, 5) et doté en chaque branche d'un clapet anti retour (49, 50) suivi d'un point d'injection (44, 45) ;
   • au moins deux cuves (10, 11) de produits additifs ;
   • des moyens (12) permettant de doser la quantité de chaque produit additif à injecter dans le second conduit pour être mélangé à l'eau ;

   - lesdits moyens (12) réalisent des lots successifs de différents pré mélanges d'eau et de produits additifs, chaque pré-mélange correspondant à une quantité de produits additifs, de manière à ce que ces pré mélanges puissent être différents suivant les tronçons dans lesquels ils seront injectés, d'une part, qu'ils soient modulés en dosage afin d'obtenir sur chaque tronçons de rampe une concentration de produit additifs ad hoc conforme à la concentration prédéfinie d'autre part,

   **caractérisé en ce que** :

   - ledit dispositif comporte deux, trois ou plusieurs cuves tampons (29, 30) aptes à recevoir chacune des lots de pré mélange successifs et dont la sortie est reliées pour chacune, à une pompe puis aux points d'injection (44, 45) des branches du second conduit (9) afin de pouvoir alimenter un ou plusieurs tronçons de rampe en pré mélange

- et enfin qu'après addition d'eau au pré mélange, par la pompe (6), l'on obtienne sur chaque tronçon de rampe une pression constante de pulvérisation.

2. Dispositif selon la revendication 1, **caractérisé en ce que** la quantité de produits additifs contenu dans un lot de pré mélange correspond exactement à la quantité de produits additifs souhaité devant être épandue sur une unité de surface prédéfinie, et **en ce que** le volume global de chaque lot de pré mélange est constant grâce à l'adjonction d'un complément de volume d'eau au volume de produits additifs mis.

3. Dispositif selon l'une des revendications 1 ou 2, **caractérisé en ce que** les moyens aptes à réaliser les lots successifs de pré mélange incluent un système de dosage type « piston fictif » constitué :

   • d'une chambre (13) reliée du coté amont à un ou plusieurs débitmètres de mesure (17b) d'une part, et à un débitmètre compteur d'eau (18b) d'autre part, et du coté aval à un troisième conduit (14) d'évacuation du contenu de la chambre (13) sur lequel se trouve une vanne nommée vanne de vidange (20) permettant l'évacuation contrôlée du contenu de la chambre (13),
   • d'autant de vannes pilotées (15, 16) que de cuves (10, 11) de produit additif, connectées d'un coté à celle-ci et de l'autre en un point d'injection se trouvant au troisième conduit (14) entre la chambre (13) et l'amont de la vanne de vidange (20),
   • de moyen permettant de contrôler précisément la quantité de produit rentrant dans la chambre (13) constitué pour chaque débitmètre de mesure (17b) placés en amont de la chambre, en série, d'une restriction (17a) limitant le débit dans la plage de mesure du débitmètre auquel il est associé, d'une vanne (17) permettant d'obtenir le volume désiré, et d'un conduit (22) reliant cette vanne (17) à l'aval de la vanne de vidange(20).
   • de moyen de mise en pression du contenu des cuves de produit additif constitué d'une pompe à air (23), d'un régulateur de pression (24) et de vannes trois voies (26, 27) connectées sur chaque cuves de produit additif (10, 11).
   • de moyen permettant d'évacuer le contenu de la chambre (13) par un flux inverse à celui de son remplissage lors de la mesure des produits additifs constitué, en série, du débitmètre compteur d'eau (18b), d'une restriction (18a) limitant le débit dans la plage de mesure du débitmètre (18b), d'une vanne deux voies (18) et d'un tuyau (19) reliant cette vanne (18) à l'aval de la pompe d'eau (6).

4. Dispositif selon l'une des revendications 1 ou 2, **caractérisé en ce que** les moyens aptes à réaliser les lots successifs de pré mélange incluent une seringue à étage (54), comprenant au moins deux chambres, et pourvue d'un piston (53) mû de préférence par un moteur électrique (51).

5. Dispositif selon la revendication 4, **caractérisé en ce qu'**il possède :

   • un cinquième conduit (64) en dérivation du premier conduit (8) et relié à la sortie de la cuve principale d'eau (2),
   • une vanne deux voies (15, 16) pour chaque cuve (10, 11) de produit additif connectée en un point d'injection au troisième conduit (14) en amont d'une vanne de vidange (20), et
   • une vanne trois voies (58, 59, 60) pour l'eau et le contenu du troisième conduit (14), et **en ce que** chaque chambre de la seringue à étage (54) est reliée au cinquième conduit (64) ou au troisième conduit (14) via une vanne trois voies (58, 59, 60) dont une première voie qui est aussi la voie commune de la vanne, est reliée à une des chambres de la seringue à étage (54) , la seconde voie est reliée à une partie amont du troisième conduit (14), la troisième voie est reliée à la partie aval du cinquième conduit (64) c'est à dire que chaque vanne à deux ou trois voies permet le remplissage de la chambre correspondante, soit d'eau, soit de produit additif correspondant.

6. Dispositif selon la revendication 4 ou 5 **caractérisé en ce que** les dimensions de chaque chambre de la seringue à étage (54) sont calculées pour réaliser *in fine* un pré-mélange selon le dosage souhaité pour le produit correspondant.

7. Dispositif selon la revendication 1, **caractérisé en ce qu'**il comprend un manomètre (48), placé sur un tronçon de rampe (4), contrôlant la pression nette donc le débit au niveau de ce tronçon.

8. Dispositif selon l'une des revendications 1 à 6, **caractérisé en ce que** chaque cuve tampon (29, 30) est scindée en deux parties : une partie haute (29a, 30a) recevant le pré mélange en cours de constitution, une deuxième partie (29b, 30b) recevant le pré mélange une fois celui ci totalement constitué et qu'une vanne deux voies (61, 62) relie la partie haute à la partie basse de la cuve tampon.

**9.** Dispositif selon l'une des revendications 1 à 8, **caractérisé en ce que** chaque cuve tampon (29, 30) comporte des moyens de régulation du débit du pré mélange à injecter dans les tronçons de rampe souhaité, cesdits moyens étant constitués successivement d'une pompe (32, 35), d'un régulateur (33, 36) dont les retours (34, 37) sont canalisés sur la cuve tampon (29, 30) correspondante afin d'en assurer le brassage, d'un clapet anti retour (38, 40), d'un débitmètre (39, 41) et d'un conduit de sortie (46, 47) de pré mélange.

**10.** Dispositif selon l'une des revendications 1 à 9, **caractérisé en ce qu'**un multiplexeur (42, 43) relie les conduits de sortie (46, 47) de pré mélange des cuves tampons (29, 30), aux points d'injection (44, 45) des branches du deuxième conduit (9) allant aux tronçons de rampe (4, 5), et aiguille ainsi, au choix, n'importe quel pré mélange sur n'importe quel tronçon de rampe (4, 5).

**11.** Dispositif selon la revendication 10 **caractérisé en ce que** d'une part, le débit de la pompe (32, 35) en sortie de chaque cuve tampon (29, 30) est régulé en fonction de la vitesse d'avancement du pulvérisateur et du nombre de tronçons connectés par l'aiguillage du multiplexeur (42, 43) et que d'autre part, la pression de la pompe d'eau (6) est régulée afin d'assurer une constante pression au niveau des buses de la rampe de pulvérisation et corriger les variations de pression dues aux changements de débit des pompes en sortie de cuve tampon (29, 30) lors des changements de vitesse du pulvérisateur.

**12.** Dispositif selon l'une des revendications 10 ou 11, **caractérisé en ce que** chaque élément de commutation du multiplexeur (42, 43) ainsi que les points de jonction du deuxième conduit (9) sont placés sur le tronçon de rampe correspondant, au plus prés des buses.

**13.** Procédé pour la préparation de une, deux ou plusieurs solutions aqueuses destinées à être pulvérisées simultanément ou alternativement à l'aide d'une rampe de buses de pulvérisation constituée de plusieurs tronçons de rampe mis en série ou en parallèle, sur une surface, tel qu'un sol cultivé, à partir d'un mélange d'eau et de deux, trois ou plusieurs produits additifs, du type comprenant :

- une cuve principale (2) d'eau,
- une pompe (6) apte à être reliée à chaque tronçon de la rampe de buses de pulvérisation;
- un premier conduit (8) reliant la cuve principale d'eau (2) à ladite pompe (6) ;
- un second conduit (9) qui se divise en autant de branches parallèles reliant la sortie de la dite pompe (6) à chaque tronçon de rampe et doté en chaque branche d'un clapet anti retour (49, 50) suivi d'un point d'injection (44, 45) ;
- au moins deux cuves de produits additifs (10, 11) ;
- des moyens (12) permettant de doser la quantité de chaque produit additif à injecter dans le second conduit (9) pour être mélangé à l'eau ;

  - lesdits moyens (12) réalisent des lots successifs de différents pré mélanges d'eau et de produits additifs, chaque pré-mélange correspondant à une quantité de produits additifs, de manière à ce que ces pré mélanges puisse être différents suivant les tronçons dans lesquels ils seront injectés, d'une part, qu'ils soient modulés en dosage afin d'obtenir sur chaque tronçons de rampe une concentration de produit additifs ad hoc conforme à la concentration prédéfinie d'autre part,

**caractérisé en ce que**

  - ledit dispositif comporte deux, trois ou plusieurs cuves tampons (29, 30) aptes à recevoir chacune des lots de pré mélange successifs et dont la sortie est reliées pour chacune, à une pompe puis aux points d'injection (44, 45) des branches du second conduit (9) afin de pouvoir alimenter un ou plusieurs tronçons de rampe en pré mélange et enfin
  - qu'après addition d'eau au pré mélange, par la pompe (6), l'on obtienne sur chaque tronçon de rampe une pression constante de pulvérisation.

**14.** Procédé selon la revendication 13, **caractérisé en ce que** les moyens aptes à réaliser les lots successifs de pré mélange incluent une seringue à étage (54), comprenant au moins deux chambres, et pourvue d'un piston (53) mû de préférence par un moteur électrique (51).

**15.** Procédé selon la revendication 13, **caractérisé en ce que** les moyens aptes à réaliser les lots successifs de pré mélange incluent un système de dosage type « piston fictif » constitué :

• d'une chambre (13) reliée du coté amont à un ou plusieurs débitmètres de mesure (17b) d'une part, et à un débitmètre compteur d'eau (18b) d'autre part, et du coté aval à un troisième conduit (14) d'évacuation du contenu de la chambre (13) sur lequel se trouve une vanne nommée vanne de vidange (20) permettant l'évacuation contrôlée du contenu de la chambre (13),

• d'autant de vannes pilotées que de cuves de produit additif, connectées d'un coté à celle-ci et de l'autre en un point d'injection se trouvant au troisième conduit entre la chambre et l'amont de la vanne de vidange,

• de moyen permettant de contrôler précisément la quantité de produit rentrant dans la chambre (13) constitué pour chaque débitmètre de mesure (17b) placés en amont de la chambre (13), en série, d'une restriction (17a) limitant le débit dans la plage de mesure du débitmètre (17b) auquel il est associé, d'une vanne (17) permettant d'obtenir le volume désiré, et d'un conduit (22) reliant cette vanne (17) à l'aval de la vanne de vidange (20),

• de moyen de mise en pression du contenu des cuves (10, 11) de produit additif constitué d'une pompe à air (23), d'un régulateur de pression (24) et de vannes trois voies (26, 27) connectées sur chaque cuves (10, 11) de produit additif,

• de moyen permettant d'évacuer le contenu de la chambre (13) par un flux inverse à celui de son remplissage lors de la mesure des produits additifs constitué, en série, du débitmètre compteur d'eau (18b), d'une restriction (18a) limitant le débit dans la plage de mesure du débitmètre (18b), d'une vanne deux voie (18) et d'un tuyau (19) reliant cette vanne deux voie (18) à l'aval de la pompe d'eau (6).

## Patentansprüche

1. Vorrichtung zur Herstellung von einer, zwei oder mehreren wässrigen Lösungen, die bestimmt sind, mit Hilfe eines Sprühdüsengestänges, das aus mehreren in Reihe oder parallel angeordneten Gestängeabschnitten besteht, auf einer Fläche wie ein bestellter Boden gleichzeitig oder abwechselnd versprüht zu werden, aus einem Gemisch aus Wasser und zwei, drei oder mehreren Zusatzprodukten, des Typs, umfassend:

   • einen Hauptwassertank (2),
   • eine Pumpe (6), die imstande ist, mit jedem Abschnitt des Sprühdüsengestänges verbunden zu sein;
   • eine erste Leitung (8), die den Wassertank mit der Pumpe verbindet,
   • eine zweite Leitung (9), die sich in so viele parallele Abzweigungen teilt, die den Ausgang der Pumpe (6) mit jedem Gestängeabschnitt (4, 5) verbinden und in jeder Abzweigung mit einem Rückschlagventil (49, 50) ausgestattet ist, gefolgt von einem Einspeisepunkt (44, 45);
   • mindestens zwei Zusatzprodukte-Tanks (10, 11);
   • Mittel (12), die erlauben, die Menge jedes in die zweite Leitung zwecks Mischens mit dem Wasser einzuleitenden Zusatzprodukts zu dosieren;

   - wobei die Mittel (12) aufeinanderfolgende Lose verschiedener Vorgemische aus Wasser und Zusatzprodukten herstellen, wobei jedes Vorgemisch einer Zusatzprodukte-Menge derart entspricht, dass diese Vorgemische gemäß den Abschnitten, in die sie eingeleitet werden, zum einen unterschiedlich sein können, und dass sie zum anderen dosierungsmoduliert sind, um in jedem Gestängeabschnitt ad hoc eine Zusatzprodukt-Konzentration zu erhalten, die der vorher festgelegten Konzentration entspricht,

   **dadurch gekennzeichnet, dass**:

   - die Vorrichtung zwei, drei oder mehrere Puffertanks (29, 30) aufweist, die jeweils imstande sind, aufeinanderfolgende Vorgemischlose aufzunehmen und deren Ausgang von jedem mit einer Pumpe, dann mit den Einspeisepunkten (44, 45) der Abzweigungen der zweiten Leitung (9) verbunden ist, um einen oder mehrere Gestängeabschnitte mit Vorgemisch versorgen zu können,
   - und man schließlich, nach Hinzufügen von Wasser zu dem Vorgemisch durch die Pumpe (6) in jedem Gestängeabschnitt einen konstanten Sprühdruck erhält.

2. Vorrichtung nach Anspruch 1, **dadurch gekennzeichnet, dass** die in einem Vorgemischlos enthaltene Zusatzprodukte-Menge genau der gewünschten Zusatzprodukte-Menge entspricht, die auf einer vorher festgelegten Flächeneinheit zu verteilen ist, und dass das globale Volumen jedes Vorgemischloses dank der Zugabe eines ergänzenden Wasservolumens zum eingesetzten Zusatzprodukt-Volumen konstant ist.

3. Vorrichtung nach einem der Ansprüche 1 oder 2, **dadurch gekennzeichnet, dass** die Mittel, die imstande sind, aufeinanderfolgende Vorgemischlose herzustellen, ein Dosiersystem vom Typ "fiktiver Kolben" einschließen, bestehend aus:

- einer Kammer (13), die auf der stromaufwärtigen Seite zum einen mit einem oder mehreren Mess-Durchlaufmessern (17b) und zum anderen mit einem Wasserzähler-Durchlaufmesser (18b) und auf der stromabwärtigen Seite mit einer dritten Leitung (14) zum Ableiten des Inhalts der Kammer (13) verbunden ist, auf der sich ein Ventil, bezeichnet als Ablassventil (20), befindet, das die kontrollierte Ableitung des Inhalts der Kammer (13) erlaubt,
- genauso vielen gesteuerten Ventilen (15, 16) wie Zusatzprodukte-Tanks (10, 11), die auf einer Seite mit diesem und auf der anderen mit einem Einspeisepunkt verbunden sind, der sich auf der dritten Leitung (14) zwischen der Kammer (13) und vorgelagert zum Ablassventil (20) befindet,
- einem Mittel, das erlaubt, die in die Kammer (13) eintretende Produktmenge genau zu kontrollieren, das für jeden Mess-Durchlaufmesser (17b), die der Kammer vorgelagert platziert sind, in Reihe aus einer Einengung (17a) besteht, die den Durchfluss im Messbereich des Durchflussmessers begrenzt, dem er zugeordnet ist, einem Ventil (17), das erlaubt, das gewünschte Volumen zu erhalten und einer Leitung (22), die dieses Ventil (17) dem Ablassventil (20) nachgelagert verbindet,
- einem Mittel zum Unterdrucksetzen des Inhalts der Zusatzprodukte-Tanks, das aus einer Luftpumpe (23), einem Druckregler (24) und Dreiwegeventilen (26, 27) besteht, die auf jedem Zusatzprodukt-Tank (10, 11) angebracht sind,
- einem Mittel, das erlaubt, den Inhalt aus der Kammer (13) durch einen Strom umgekehrt zu dem seines Befüllens bei der Messung der Zusatzprodukte abzuleiten, das in Reihe aus dem Wasserzähler-Durchlaufmesser (18b), einer Einengung (18a), die den Durchfluss im Messbereich des Durchflussmessers (18b) begrenzt, einem Zweiwegeventil (18) und einem Rohr (19) besteht, das dieses Ventil (18) der Wasserpumpe (6) nachgelagert verbindet.

4. Vorrichtung nach einem der Ansprüche 1 oder 2, **dadurch gekennzeichnet, dass** die Mittel, die imstande sind, aufeinanderfolgende Vorgemischlose herzustellen, eine Stufenspritze (54) einschließen, die mindestens zwei Kammern umfasst und mit einem Kolben (53) versehen ist, der vorzugsweise von einem Elektromotor (51) bewegt wird.

5. Vorrichtung nach Anspruch 4, **dadurch gekennzeichnet, dass** sie besitzt:

- eine fünfte Leitung (64) als Bypass der ersten Leitung (8) und verbunden mit dem Ausgang des Hauptwassertanks (2),
- ein Zweiwegeventil (15, 16) für jeden Zusatzprodukt-Tank (10, 11), das in einem Einspeisepunkt mit der dritten Leitung (14) einem Ablassventil (20) vorgelagert verbunden ist, und
- ein Dreiwegeventil (58, 59, 60) für das Wasser und den Inhalt der dritten Leitung (14),

und dass jede Kammer der Stufenspritze (54) mit der fünften Leitung (64) oder mit der dritten Leitung (14) über ein Dreiwegeventil (58, 59, 60) verbunden ist, von dem ein erster Weg, der auch der gemeinsame Weg des Ventils ist, mit einer der Kammern der Stufenspritze (54) verbunden ist, der zweite Weg mit einem stromaufwärtigen Teil der dritten Leitung (14) verbunden ist, der dritte Weg mit dem stomabwärtigen Teil der fünften Leitung (64) verbunden ist, das heißt, dass jedes Zwei- oder Dreiwegeventil das Befüllen der entsprechenden Kammer entweder mit Wasser oder mit entsprechendem Zusatzprodukt gestattet.

6. Vorrichtung nach Anspruch 4 oder 5, **dadurch gekennzeichnet, dass** die Abmessungen jeder Kammer der Stufenspritze (54) berechnet sind, um *in fine* ein Vorgemisch gemäß der gewünschten Dosierung für das entsprechende Produkt herzustellen.

7. Vorrichtung nach Anspruch 1, **dadurch gekennzeichnet, dass** sie ein Manometer (48) umfasst, das auf einem Gestängeabschnitt (4) platziert ist, das den Nettodruck, also den Durchfluss im Bereich dieses Abschnitts, steuert.

8. Vorrichtung nach einem der Ansprüche 1 bis 6, **dadurch gekennzeichnet, dass** jeder Puffertank (29, 30) in zwei Teile unterteilt ist: einen oberen Teil (29a, 30a), der das in Bildung befindliche Vorgemisch aufnimmt, einen zweiten Teil (29b, 30b), der das Vorgemisch aufnimmt, sobald dieses vollständig gebildet ist und dass ein Zweiwegeventil (61, 62) den oberen Teil mit dem unteren Teil des Puffertanks verbindet.

9. Vorrichtung nach einem der Ansprüche 1 bis 8, **dadurch gekennzeichnet, dass** jeder Puffertank (29, 30) Mittel zum Einstellen des Durchflusses des in die gewünschten Gestängeabschnitte einzuleitenden Vorgemischs aufweist, wobei diese Mittel aufeinanderfolgend aus einer Pumpe (32, 35), einem Regler (33, 36), dessen Rückführungen (34, 37) über den entsprechenden Puffertank (29, 30) führen, um deren Vermischen zu gewährleisten, einem Rückschlagventil (38, 40), einem Durchflussmesser (39, 41) und einer Vorgemisch-Ausgangsleitung (46, 47) bestehen.

10. Vorrichtung nach einem der Ansprüche 1 bis 9, **dadurch gekennzeichnet, dass** ein Multiplexer (42, 43) die Vorgemisch-Ausgangsleitungen (46, 47) der Puffertanks (29, 30) mit den Einspeisepunkten (44, 45) der Abzweigungen der zweiten Leitung (9), die zu den Gestängeabschnitten (4, 5) reicht, verbindet und somit nach Wahl jedes beliebige Vorgemisch zu jedem beliebigen Gestängeabschnitt lenkt.

11. Vorrichtung nach Anspruch 10, **dadurch gekennzeichnet, dass** zum einen der Durchfluss der Pumpe (32, 35) am Ausgang jedes Puffertanks (29, 30) in Abhängigkeit von der Fortbewegungsgeschwindigkeit der Feldspritze und der Anzahl von Abschnitten, die durch Lenkung durch den Multiplexer (42, 43) angeschlossen sind, geregelt wird und zum anderen der Druck der Wasserpumpe (6) geregelt wird, um einen konstanten Druck im Bereich der Düsen des Sprühgestänges zu gewährleisten und die Druckschwankungen aufgrund von Durchflussänderungen der Pumpen am Ausgang eines Puffertanks (29, 30) bei Änderungen der Geschwindigkeit der Feldspritze zu korrigieren.

12. Vorrichtung nach einem der Ansprüche 10 oder 11, **dadurch gekennzeichnet, dass** jedes Umschaltelement des Multiplexers (42, 43) sowie die Anschlusspunkte der zweiten Leitung (9) auf dem entsprechenden Gestängeabschnitt so nah wie möglich an den Düsen platziert sind.

13. Verfahren zur Herstellung von einer, zwei oder mehreren wässrigen Lösungen, die bestimmt sind, mit Hilfe eines Sprühdüsengestänges, das aus mehreren in Reihe oder parallel angeordneten Gestängeabschnitten besteht, auf einer Fläche wie ein bestellter Boden gleichzeitig oder abwechselnd versprüht zu werden, aus einem Gemisch aus Wasser und zwei, drei oder mehreren Zusatzprodukten, des Typs, umfassend:

- einen Hauptwassertank (2),
- eine Pumpe (6), die imstande ist, mit jedem Abschnitt des Sprühdüsengestänges verbunden zu sein;
- eine erste Leitung (8), die den Hauptwassertank (2) mit der Pumpe (6) verbindet;
- eine zweite Leitung (9), die sich in so viele parallele Abzweigungen teilt, die den Ausgang der Pumpe (6) mit jedem Gestängeabschnitt verbinden und in jeder Abzweigung mit einem Rückschlagventil (49, 50) ausgestattet ist, gefolgt von einem Einspeisepunkt (44, 45);
- mindestens zwei Zusatzprodukte-Tanks (10, 11);
- Mittel (12), die erlauben, die Menge jedes in die zweite Leitung (9) zwecks Mischens mit dem Wasser einzuleitenden Zusatzprodukts zu dosieren;

   - wobei die Mittel (12) aufeinanderfolgende Lose verschiedener Vorgemische aus Wasser und Zusatzprodukten herstellen, wobei jedes Vorgemisch einer Zusatzprodukte-Menge derart entspricht, dass diese Vorgemische gemäß den Abschnitten, in die sie eingeleitet werden, zum einen unterschiedlich sein können, und dass sie zum anderen dosierungsmoduliert sind, um in jedem Gestängeabschnitt ad hoc eine Zusatzprodukt-Konzentration zu erhalten, die der vorher festgelegten Konzentration entspricht,

**dadurch gekennzeichnet, dass**:

   - die Vorrichtung zwei, drei oder mehrere Puffertanks (29, 30) aufweist, die jeweils imstande sind, aufeinanderfolgende Vorgemischlose aufzunehmen und deren Ausgang von jedem mit einer Pumpe, dann mit den Einspeisepunkten (44, 45) der Abzweigungen der zweiten Leitung (9) verbunden ist, um einen oder mehrere Gestängeabschnitte mit Vorgemisch versorgen zu können, und man schließlich
   - nach Hinzufügen von Wasser zu dem Vorgemisch durch die Pumpe (6) in jedem Gestängeabschnitt einen konstanten Sprühdruck erhält.

14. Verfahren nach Anspruch 13, **dadurch gekennzeichnet, dass** die Mittel, die imstande sind, die aufeinanderfolgenden Vorgemischlose herzustellen, eine Stufenspritze (54) einschließen, die mindestens zwei Kammern umfasst und mit einem Kolben (53) versehen ist, der vorzugsweise von einem Elektromotor (51) bewegt wird.

15. Verfahren nach Anspruch 13, **dadurch gekennzeichnet, dass** die Mittel, die imstande sind, die aufeinanderfolgenden Vorgemischlose herzustellen, ein Dosiersystem vom Typ "fiktiver Kolben" einschließen, bestehend aus:

- einer Kammer (13), die auf der stromaufwärtigen Seite zum einen mit einem oder mehreren Mess-Durchlaufmessern (17b) und zum anderen mit einem Wasserzähler-Durchlaufmesser (18b) und auf der stromabwärtigen Seite mit einer dritten Leitung (14) zum Ableiten des Inhalts der Kammer (13) verbunden ist, auf der sich ein Ventil, bezeichnet als Ablassventil (20), befindet, das die kontrollierte Ableitung des Inhalts der Kammer (13) erlaubt,

• genauso vielen gesteuerten Ventilen wie Zusatzprodukte-Tanks, die auf einer Seite mit diesem und auf der anderen mit einem Einspeisepunkt verbunden sind, der sich auf der dritten Leitung zwischen der Kammer und vorgelagert zum Ablassventil befindet,

• einem Mittel, das erlaubt, die in die Kammer (13) eintretende Produktmenge genau zu kontrollieren, das für jeden Mess-Durchlaufmesser (17b), die der Kammer (13) vorgelagert platziert sind, in Reihe aus einer Einengung (17a) besteht, die den Durchfluss im Messbereich des Durchflussmessers (17b) begrenzt, dem er zugeordnet ist, einem Ventil (17), das erlaubt, das gewünschte Volumen zu erhalten und einer Leitung (22), die dieses Ventil (17) dem Ablassventil (20) nachgelagert verbindet,

• einem Mittel zum Unterdrucksetzen des Inhalts der Zusatzprodukte-Tanks (10, 11), das aus einer Luftpumpe (23), einem Druckregler (24) und Dreiwegeventilen (26, 27) besteht, die auf jedem Zusatzprodukt-Tank (10, 11) angebracht sind,

• einem Mittel, das erlaubt, den Inhalt aus der Kammer (13) durch einen Strom umgekehrt zu dem seines Befüllens bei der Messung der Zusatzprodukte abzuleiten, das in Reihe aus dem Wasserzähler-Durchlaufmesser (18b), einer Einengung (18a), die den Durchfluss im Messbereich des Durchflussmessers (18b) begrenzt, einem Zweiwegeventil (18) und einem Rohr (19) besteht, das dieses Zweiwegeventil (18) der Wasserpumpe (6) nachgelagert verbindet.

## Claims

1. A device for preparing one, two or more aqueous solutions intended to be sprayed simultaneously or alternatively, using a spray nozzle boom comprised of several boom sections (4,5) connected in series or in parallel, on a surface such as a cultivated soil, from a mixture of water and of two, three or more additive products, of the type comprising: a main water tank (2);

   • a pump (6) adapted to be connected to each section of the spray nozzle boom;
   • a first pipe (8) connecting the water tank to said pump,
   • a second pipe (9) dividing into as many parallel branches connecting the outlet of said pump (6) to each boom section (4,5) and provided at each branch with a check valve (49,50) followed by an injection point (44,45);
   • at least two additive product tanks (10,11);
   • means (12) for metering the amount of each additive product to be injected into the second pipe to be mixed with water,

   wherein said means (12) carry out successive batches of different premixtures of water and additive products, wherein each premixture corresponds to an amount of additive products so that these premixtures may be different according to the sections in which they will be injected on the one hand, that they are dosage-modulated in order to obtain on each boom section an ad hoc concentration of additive products in accordance with the predetermined concentration on the other hand,
   and wherein said device comprises two, three or more buffer tanks (29,30) adapted to each receive successive premixture batches, and the output of which is connected for each one to a pump and then to the injection points (44,45) of the branches of the second pipe (9) in order to be able to supply one or more boom sections with premixture, and finally that, after the addition of water to the premixture, by the pump (6), a constant spray pressure is obtained on each boom section.

2. The device according to claim 1, **characterized in that** the amount of additive products contained in a premixture batch corresponds exactly to the desired amount of additive products to be spread on a predefined surface unit, and **in that** the overall volume of each premixture batch is constant thanks to the addition of an additional volume of water to the volume of additive products introduced.

3. The device according to the claim 1 or 2, **characterized in that** the means adapted to carry out the premixture successive batches include a "dummy piston"-type metering system, comprising :

   • a chamber (13) connected on the upstream side to one or more measuring flow meters (17b) on the one hand, and to a water meter flow meter (18b) on the other hand, and on the downstream side to a third pipe (14), for discharging the contents of the chamber (13), on which there is a valve called the drain valve (20) for the controlled discharge of the contents of the chamber (13);

• as many controlled valves (15,16) as additive product tanks (10,11), connected at one end thereto and at the other end at an injection point located at the third pipe (14) between the chamber (13) and upstream of the drain valve (20);

• means for precisely controlling the amount of product entering the chamber (13) comprised, for each measuring flow meter (17b) placed upstream of the chamber, in series, of a restriction (17a) limiting the flow rate in the measuring range of the flow meter (17b) to which it is associated, of a valve (17) for obtaining the desired volume, and of a pipe (22) connecting this valve (17) to downstream of the drain valve (20);

• means for pressurizing the contents of the additive product tanks comprised of an air pump (23), of a pressure regulator (24) and of three-way valves (26,27) connected onto each additive product tank (10,11);

• means for discharging the contents of the chamber (13) by a flow which is the reverse of that of its filling when measuring the additive products comprised, in series, of the water meter flow meter (18b), of a restriction (18a) limiting the flow rate in the measuring range the flow meter (18b), of a two-way valve (18) and of a pipe (19) connecting said valve (18) to downstream of the water pump (6).

4. The device according to the claim 1 or 2, **characterized in that** the means adapted to carry out the premixture successive batches include a stage syringe (54), comprising at least two chambers, and provided with a piston (53) driven preferably by an electric motor (51).

5. The device according to claim 4, **characterized in that** it comprises:

• a fifth pipe (64) bypassing the first pipe (8) and connected to the outlet of the water tank (2);
• a two-way valve (15,16) for each additive product tank (10,11) connected at an injection point to the third pipe (14) upstream of a drain valve (20); and
• a three-way valve (58,59,60) for water and the contents of the third pipe (14), and **in that** each chamber of the stage syringe (54) is connected to the fifth pipe (64) or the third pipe (14) via a three-way valve (58,59,60), a first way of which, which is also the common way of the valve, is connected to one of the chambers of the stage syringe (54), the second way is connected to an upstream part of the third pipe (14), the third way is connected to the downstream part of the fifth pipe (64), namely that each two- or three-way valve allows the corresponding chamber to be filled, either with water or with the corresponding additive product.

6. The device according to claim 4 or 5, **characterized in that** the dimensions of each chamber of the syringe (54) are calculated to ultimately achieve a premixture in accordance with the desired dosage for the corresponding product.

7. The device according to the claim 1, **characterized in that** it comprises a manometer (48), placed on a boom section controlling the pressure and therefore the flow rate at this boom section.

8. The device according to one of claims 1 to 6, **characterized in that** each buffer tank is divided into two parts: an upper part (29a, 30a) receiving the premixture being constituted, a second part (29b, 30b) receiving the premixture once completely constituted and **in that** a two-way valve (61, 62) connects the upper part to the lower part of the buffer tank.

9. The device according to one of claim 1 to 8, **characterized in that** each buffer tank (29,30) comprises means for regulating the flow rate of the premixture to be injected into the desired boom sections, said means being successively comprised of a pump (32,35), a regulator (33,36), the returns (34,37) of which are channeled onto the corresponding buffer tank (29,30) in order to ensure mixing thereof, a check valve (38,40), a flow meter (39,41) and a premixture outlet pipe (46,47).

10. The device according to one of claim 1 to 9, **characterized in that** a multiplexer (42,43) connects the premixture outlet pipes (46,47) of the buffer tanks (29,30) to the injection points (44,45) of the branches of the second pipe (9) going to the boom sections (4, 5), and thereby directs, as desired, any premixture onto any boom section (4,5).

11. The device according to claim 10, **characterized in that**, on the one hand, the flow rate of the pump (32,35) at the outlet of each buffer tank (29,30) is regulated depending on the sprayer ground speed and the number of sections connected by the switch of the multiplexer (42,43), and, on the other hand, the pressure of the water pump (6) is regulated in order to ensure a constant pressure at the spray boom nozzles and correct the pressure variations due to the flow rate changes of the pumps at the outlet of the buffer tanks (29,30) when the sprayer speed changes.

**12.** The device according to the claim 10 or 11, **characterized in that** each switching element of the multiplexer (42,43), as well as the junction points of the second pipe (9), are placed on the corresponding boom section, as close to the nozzles as possible.

**13.** A process for preparing one, two or more aqueous solutions intended to be sprayed simultaneously or alternatively, using a spray nozzle boom comprised of several boom sections connected in series or in parallel, on a surface such as a cultivated soil, from a mixture of water and of two, three or more additive products, of the type comprising:

• a main water tank (2);
• a pump (6) adapted to be connected to each section of the spray nozzle boom;
• a first pipe (8) connecting the water tank (2) to said pump (6);
• a second pipe (9) dividing into as many parallel branches connecting the outlet of said pump to each boom section and provided at each branch with a check valve (49,50) followed by an injection point (44,45);
• at least two additive product tanks (10,11);
• means (12) for metering the amount of each additive product to be injected into the second pipe (9) to be mixed with water,

wherein said means carry out successive batches of different premixtures of water and additive products, wherein each premixture corresponds to an amount of additive products, so that these premixtures may be different according to the sections in which they will be injected on the one hand, that they are dosage-modulated in order to obtain on each boom section an ad hoc concentration of additive products in accordance with the predetermined concentration on the other hand
and wherein said device comprises two, three or more buffer tanks (29,30) adapted to each receive successive premixture batches, and the output of which is connected for each one to a pump and then to the injection points (44,45) of the branches of the second pipe (9) in order to be able to supply one or more boom sections with premixture, and finally that, after the addition of water to the premixture, a constant spray pressure is obtained on each boom section.

**14.** The process according to claim 13, **characterized in that** the means adapted to carry out the premixture successive batches include a stage syringe (54), comprising at least two chambers, and provided with a piston (53) driven preferably by an electric motor (51).

**15.** The process according to claim 13, **characterized in that** the means adapted to carry out the premixture successive batches include a "dummy piston"-type metering system, comprising:

• a chamber (13) connected on the upstream side to one or more measuring flow meters (17b) on the one hand, and to a second water meter flow meter (18b) on the other hand, and on the downstream side to a third pipe (14) for discharging the contents of the chamber (13) on which there is a valve called the drain valve (20) for the controlled discharge of the contents of the chamber (13);
• as many controlled valves as additive product tanks, connected at one end thereto and at the other end at an injection point located at the third pipe (14) between the chamber (13) and upstream of the drain valve;
• means for precisely controlling the amount of product entering the chamber (13) comprised, for each measuring flow meter (17b) placed upstream of the chamber (13), in series, of a restriction (17a) limiting the flow rate in the measuring range of the flow meter (17b) to which it is associated, of a valve (17) for obtaining the desired volume, and of a pipe (22) connecting this valve (17) to downstream of the drain valve (20);
• means for pressurizing the contents of the additive product tanks (10,11) comprised of an air pump (23), of a pressure regulator (24) and of three-way valves (26,27) connected onto each additive product tank (10,11);
• means for discharging the contents of the chamber by a flow which is the reverse of that of its filling when measuring the additive products comprised, in series, of the water meter flow meter (18b), of a restriction (18a) limiting the flow rate in the measuring range the flow meter (18b), of a two-way valve (18) and of a pipe (19) connecting said valve (18) to downstream of the water pump (6).

Figure 1

Figure 2

Figure 3

**EP 3 258 779 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1378293 A
- EP 1184085 A
- EP 0527027 A
- WO 2014200896 A